# EUROPEAN PATENT SPECIFICATION

(11) **EP 3 896 826 B1**
(45) Date of publication and mention of the grant of the patent: **09.10.2024**
(21) Application number: 19895164.2
(22) Date of filing: 11.12.2019
(51) Int. Cl.: H02P 29/50, H02K 7/20, F16F 15/18, H02P 23/04, H02P 25/08, H02P 29/40, H02K 1/14, H02K 11/21, H02P 6/26, H02K 19/06, H02K 29/03, H02P 29/00, F16F 15/00

(54) **VIBRATION CONTROL DEVICE**
SCHWINGUNGSSTEUERUNGSVORRICHTUNG
DISPOSITIF DE CONTRÔLE DES VIBRATIONS

(30) Priority: 14.12.2018 JP 2018234604
(43) Date of publication of application: 20.10.2021
(73) Proprietor: NSK Ltd., Tokyo 141-8560 (JP)
(72) Inventor: DOHI, Nagao, Fujisawa-shi, Kanagawa 251-8501 (JP); WAKASAKI, Tomoki, Fujisawa-shi, Kanagawa 251-8501 (JP)
(74) Representative: SSM Sandmair
(86) International application number: PCT/JP2019/048449
(87) International publication number: WO 2020/122110

(56) References cited:
- JP-A- 2002 027 779
- JP-A- 2010 022 185
- JP-A- 2010 166 681
- JP-A- 2017 139 840
- JP-A- 2017 139 840
- JP-A- 2017 192 174
- JP-A- 2018 107 843
- US-A1- 2017 093 246
- US-A1- 2017 253 233

## Description

### Field

The present invention relates to a vibration control device.

### Background

A vibration control device has been known that reduces fluctuation (torque ripple) of cyclic torque generated on a rotation driver, such as a motor, that drives an output shaft into rotation (for example, Patent Literature 1).

US2017253233A1 discloses: A vehicle including an engine, a generator, a motor, a driving member and a control device. The generator includes a rotor, a stator having a stator core with a winding wound thereon, and an inductance adjustment device that changes an inductance of the winding by changing magnetic resistance of a magnetic circuit for the winding that passes through the stator core. The current adjustment device adjusts a current outputted from the generator to the motor, which drives the driving member. The control device, upon receiving a request for increasing the current to be supplied to the motor, directs the inductance adjustment device to adjust the generator to operate in a state in which the inductance of the winding is low, directs the engine to increase a rotation speed thereof to increase the rotational power, and directs the current adjustment device to increase the output current of the generator.

JP2010022185A discloses: On the periphery of a rotor core , a field magnetic pole is projected in the d axial direction and a transformer magnetic circuit is projected in the q axial direction. The field magnetic pole is wound by a field magnetic coil and the transformer magnetic circuit is wound by a secondary coil. A high frequency voltage induced by the secondary coil is conducted to the field magnetic coil after rectification by a rectifying circuit shown in a diagram. The motor is excellent in reliability because of contactless power feeding despite that the rotor has a field coil.

JP2017139840A discloses: A rotation fluctuation reduction device comprises: an inertial body 11 to which a rotational driving force is supplied; a torque reduction mechanism part 13 which reduces rotation torque fluctuation of the inertial body; a rotational member to which rotations of the inertial body are transferred via the torque reduction mechanism part; a motor including a magnet that is provided in the rotational member and a coil that is fixed to a non-rotational member that is not rotated relatively to the rotational member, and opposes the magnet; and an LC circuit including a capacitor for temporarily storing power generated by the motor, storing power in the capacitor when a rotation speed of the rotational member is up, and supplying power stored in the capacitor to the coil by driving a switch when the rotation speed is down.

US2017093246A1 discloses: An electromagnetic rotor drive assembly for use with an internal combustion engine, the electromagnetic rotor drive assembly including a conductive coil capable of generating a magnetic field upon energization; a rotor rotatably mounted proximate the conductive coil; and a magnet coupled to the rotor, the magnet responsive to the magnetic field to angularly displace the rotor; whereby the rotor fixedly couples to a crankshaft rotated by at least one piston reciprocally disposed within a cylinder; and whereby the conductive coil is energized at a predetermined time point associated with a position of the piston within the cylinder.

### Citation List

### Patent Literature

Patent Literature 1: Japanese Patent Application Laid-open No. 2017-139840

### Summary

### Technical Problem

A conventional vibration control device employs: a magnet fixed to an output shaft; and a coil provided on the outer circumference of the magnet. In such a structure, voltage due to electromotive force generated in the coil along with rotational motion of the magnet increases as the rotation speed of the output shaft increases. Thus, a circuit including the coil inevitably needs to have a higher level of durability against high voltage. This makes such a circuit complicated and costly.

The present invention is directed to providing a vibration control device capable of reducing torque ripple attributable to a rotation driver while having a simpler configuration.

### Solution to Problem

In order to achieve the above described object, a vibration control device according to claim 1 is disclosed.

Therefore, torque that operates to reduce torque fluctuation due to the rotation driver can be generated by the vibration control device, whereby the range of torque fluctuation due to combined torque obtained by combining torque generated on the rotation driver and torque due to the vibration control device can be made smaller than the range of torque fluctuation due to the rotation driver. Torque ripple due to the rotation driver can be thus reduced. Furthermore, the rotor is formed of a soft magnetic body. This hampers the rotor from generating electromotive force in the coils even when the rotor simply rotates, and thus hampers the vibration control device from operating like a power generator. Therefore, the level of durability against high voltage required of a circuit including the coils can be lowered, whereby the vibration control device can have a simpler configuration.

The vibration control device according to an aspect of the present invention further includes a second detector configured to detect a rotation speed of the rotor. The switching circuit includes a switch configured to switch between connecting and disconnecting the coils and the charger-discharger, and the control circuit disconnects the coils from the charger-discharger when the rotation speed is out of an effective rotation speed range of the vibration control device.

Therefore, torque that can reduce torque ripple that would be generated by the rotation driver can be more reliably generated on the vibration control device.

In the vibration control device according to an aspect of the present invention, a plurality of pairs of the coils are provided, the rotor includes a plurality of pairs of pole parts, the pole parts in each pair being provided with the rotation axis therebetween in such a manner that the paired pole parts protrude in radially opposite directions, and the pole parts are not less in number of pairs than the coils.

Therefore, the number of pole parts is set to a number corresponding to the fluctuation cycle of torque due to the rotation driver, whereby the fluctuation of torque due to the vibration control device can be generated on a cycle corresponding to the fluctuation cycle of the torque due to the rotation driver.

In the vibration control device according to an aspect of the present invention, a plurality of pairs of the coils share the switching circuit with one another.

In addition, switching control of the plurality of pairs of coils can be synchronized, whereby the probability of malfunctions of the vibration control device can be reduced.

In the vibration control device according to an aspect of the present invention, the coils provided in a pair are provided in such a manner as to be connectable to the charger-discharger in parallel.

Therefore, when the electrical conditions of lead wires that form the respective coils are the same except that the form of connection of each of the coils to the charger-discharger is parallel or serial, it is easier to reduce the inductance of the coils to a lower level than when the coils are connected in series. Here, a state in which the electrical conditions of lead wires are the same means that there is no substantial difference between the configurations of the coils except for the form of the connection, more specifically, that the total installation lengths of the lead wires are equal or that electrical resistance values generated by the same lengths of the lead wires are equal, for example.

In the vibration control device according to an aspect of the present invention, the coils provided in a pair are provided in such a manner as to be connectable to the charger-discharger in series.

Therefore, when the electrical conditions of lead wires that form the respective coils are the same except that the form of connection of each of the coils to the charger-discharger is parallel or serial, it is easier to raise the inductance of the coils than when the coils are connected in parallel.

### Advantageous Effects of Invention

A vibration control device according to an aspect of the present invention is capable of reducing torque ripple attributable to a rotation driver while having a simpler configuration.

### Brief Description of Drawings

FIG. 1 illustrates an example of the main configurations of a rotation driver provided with a vibration control device and of peripheral devices thereof in an embodiment.
FIG. 2 is a sectional view taken along the A-A line of FIG. 1.
FIG. 3 is a schematic circuit diagram illustrating the main configuration of the vibration control device.
FIG. 4 illustrates an example of a schematic configuration of a circuit including coils, a charger-discharger, and a switching circuit.
FIG. 5 illustrates an example of the relations of the rotation angle of a rotor with a first period, a transition period, and a second period.
FIG. 6 illustrates the state of the circuit including the coils, the charger-discharger, and the switching circuit during the first period.
FIG. 7 illustrates the state of the circuit including the coils, the charger-discharger, and the switching circuit during the transition period.
FIG. 8 illustrates the state of the circuit including the coils, the charger-discharger, and the switching circuit during the second period.
FIG. 9 is a schematic graph illustrating the relations of currents measured by ammeters with the first period, the transition period, and the second period.
FIG. 10 illustrates the relations between first torque on the rotation driver, second torque on the vibration control device, and combined torque obtained by combining the first and the second torque.
FIG. 11 illustrates an example in which a first switch is turned on at a rotation speed at which the range of torque fluctuation due to the combined torque is larger than that of the first torque.
FIG. 12 illustrates an example of a schematic configuration of a circuit including coils, a charger-discharger, and a switching circuit in a modification.
FIG. 13 is a sectional view illustrating the main configuration of a vibration control device in a second embodiment.
FIG. 14 illustrates an example of a schematic configuration of a circuit including coils, a charger-discharger, and a switching circuit in the second embodiment.
FIG. 15 is a sectional view illustrating the main configuration of a vibration control device in a third embodiment.

### Description of Embodiments

The following describes embodiments according to the present invention with reference to the drawings but is not intended to limit the present invention. Conditions described below of different ones of the embodiments can be used in combination as appropriate. Some of the constituent elements may be excluded.

### (First Embodiment)

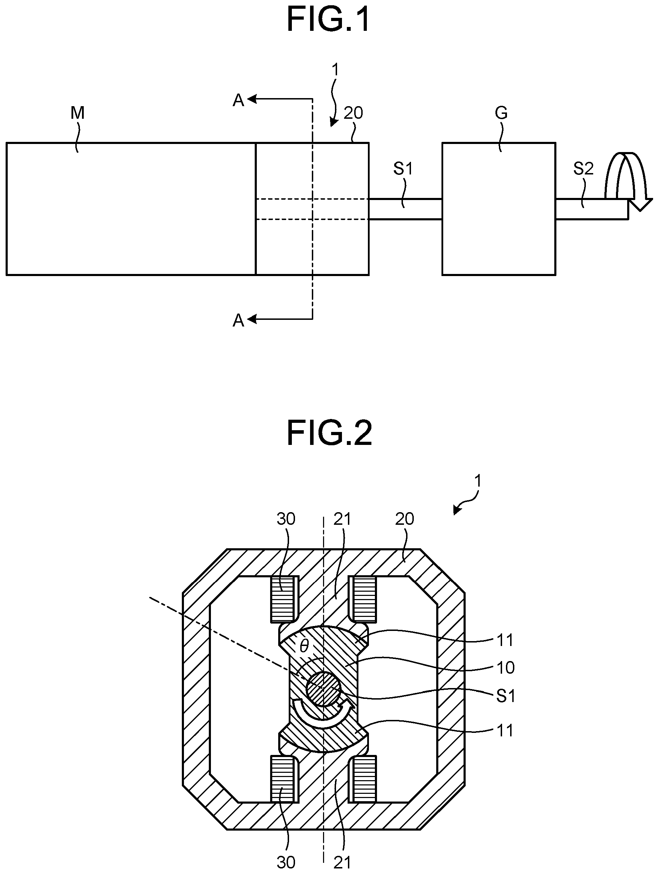

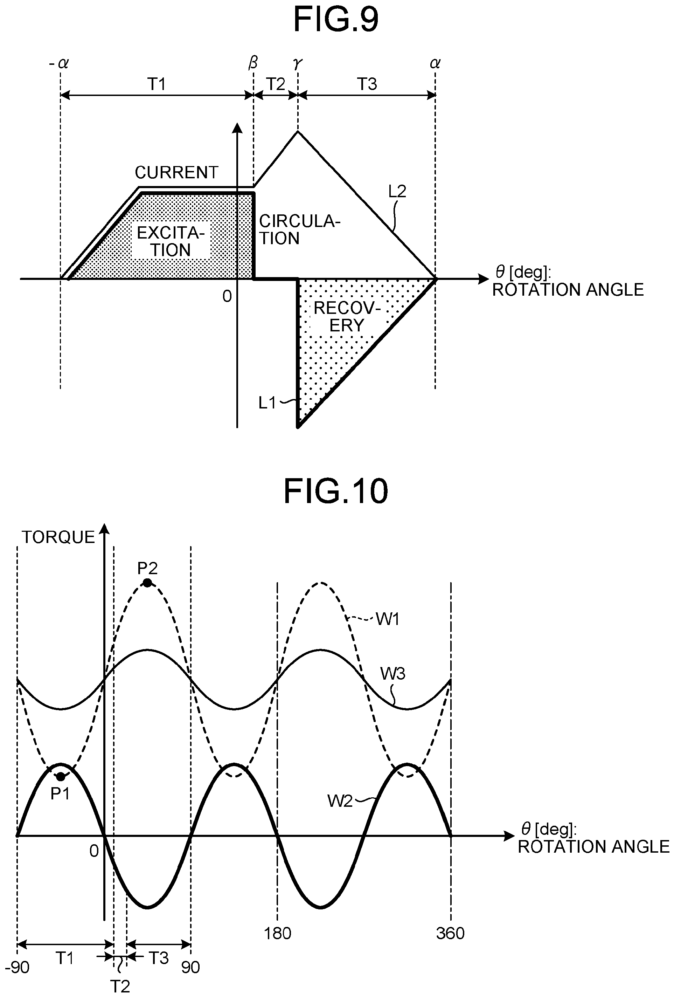

FIG. 1 illustrates an example of the main configurations of a rotation driver M provided with a vibration control device 1 in an embodiment and peripheral devices thereof. The rotation driver M is a rotation driver the output of which suffers cyclic torque fluctuation as with torque W1 illustrated in FIG. 10 described below. The rotation driver M is, for example, a reciprocating engine but may be an electric motor.

In FIG. 1, an output shaft of the rotation driver M is coupled with a shaft S1 and extends from the rotation driver M. When the rotation driver M is in operation, the shaft S1 shaped in a cylinder is driven to rotate about the center of the cylinder. The shaft S1 may be the output shaft of the rotation driver M.

The rotation driver M illustrated in FIG. 1 is coupled with a gearbox G via the shaft S1. The gearbox G moves a shaft S2 in response to rotation driving force transmitted via the shaft S1. The shaft S2 extends from one side of the gearbox G. The one side is opposite to another side of the gearbox G from which the shaft S1 extends, with a housing of the gearbox G therebetween. The shaft S2 illustrated in FIG. 1 is driven to rotate in the same direction as the shaft S1. However, the shaft S2 may be driven to rotate in a direction opposite to a direction in which the shaft S1 is driven to rotate. The shaft S2 may receive driving force for motion other than rotation, such as linear motion, transmitted thereto. The gearbox G and the shaft S2 can be omitted. The shaft S1 may be coupled directly to a subject to be driven at the terminal end.

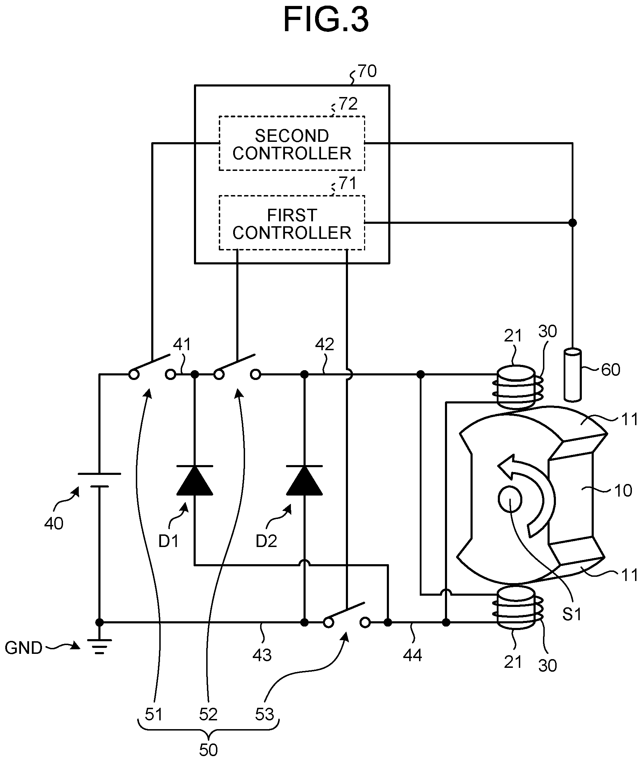

FIG. 2 is a sectional view taken along the A-A line of FIG. 1. FIG. 3 is a schematic circuit diagram illustrating the main configuration of the vibration control device 1. As illustrated in FIG. 1 to FIG. 3, the shaft S1 is provided with the vibration control device 1. The vibration control device 1 includes a rotor 10, a stator 20, coils 30, a charger-discharger 40, a switching circuit 50, a detector 60, and a control circuit 70.

The rotor 10 is a soft magnetic body fixed to the shaft S1. A material of the rotor 10 is, for example, ferritic stainless steel but is not limited thereto. The material thereof may be any material that has high magnetic permeability while having sufficiently low capability to maintain magnetic force to such an extent as to cause the rotor 10 to function as a soft magnetic body. The rotor 10 rotates when the shaft S1 rotates.

The rotor 10 illustrated in FIG. 1 includes a pair of pole parts 11, 11 provided with the shaft S1 therebetween in such a manner that the pole parts 11 protrude in radially opposite directions. Each of the pole parts 11 illustrated in FIG. 2 is a part of the rotor 10. The part has a fan-like outer circumferential portion that widens toward the outside of the rotor 10. However, this is an example of the form of the pole part 11 and is not a limiting example. The specific form thereof can be changed as appropriate.

The stator 20 is provided in a radial circumference of a rotation axis of the rotor 10. The rotation axis of the rotor 10 in the first embodiment is the shaft S1. The stator 20 of the vibration control device 1 illustrated in FIG. 1 is fixed to the housing of the rotation driver M. However, the rotation driver M and the stator 20 may be separated from each other. The stator 20 is a frame-like body or a box-like body that internally includes a space in which the rotor 10 can rotate. When the stator 20 is a box-like body, the shaft S1 penetrates the box-like body in a rotatable state. The rotor 10 and the stator 20 in the first embodiment have, for example, a layered structure having ferritic stainless steel plates layered in a direction in which the shaft S1 extends. However, the structure is not limited thereto. The specific structure of the stator 20 can be changed as appropriate.

A pair of core parts 21, 21 extending toward the shaft S1 is provided on the inner circumferential surface of the stator 20 illustrated in FIG. 1. The outer circumferential portions of the pole parts 11 do not make contact with the inner circumferential portions of the core parts 21, and the pole parts 11 are provided so as to be rotatable inside the stator 20. The pair of core parts 21, 21 is provided with a pair of the coils 30, 30. The coils 30 are provided in a pair with the shaft S1 therebetween by being fixed to the corresponding core parts 21 of the stator 20.

The charger-discharger 40 is provided so as to be connectable to the pair of coils 30, 30. The charger-discharger 40 is, for example, a secondary battery such as a lithium-ion battery but may be any charge-discharge body that can be discharged by supplying power to the pair of coils 30, 30 and charged by being supplied with power from the pair of coils 30, 30. The charger-discharger 40 may be, for example, a passive element that can store power, such as a capacitor. In the first embodiment, the pair of coils 30, 30 are connected to the charger-discharger 40 in parallel when connected to the charger-discharger 40.

The switching circuit 50 is provided so as to be able to switch connection of the pair of coils 30, 30 to the charger-discharger 40. The switching circuit 50 illustrated in FIG. 3 includes a first switch 51, a second switch 52, and a third switch 53. The first switch 51 is provided capable of switching between connecting and disconnecting the positive electrode of the charger-discharger 40 and the pair of coils 30, 30. The second switch 52 is provided capable of switching between connecting and disconnecting the first switch 51 and the pair of coils 30, 30. The first switch 51 is connected to the second switch 52 via wiring 41. The second switch 52 is connected to the coil 30 and the coil 30 via wiring 42. The third switch 53 is provided capable of switching between connecting and disconnecting the negative electrode of the charger-discharger 40 and the pair of coils 30, 30. The charger-discharger 40 is connected to the third switch 53 via wiring 43. The negative electrode side of the charger-discharger 40 to which the wiring 43 is connected is provided in such a manner as to be connected to the ground potential. In drawings such as FIG. 3, the ground potential connected to the wiring 43 is denoted as GND (ground). The third switch 53 is connected to the pair of coils 30, 30 via wiring 44.

The wiring 41 is connected to the wiring 44 via a rectifier D1. The rectifier D1 causes current to flow in a direction from the wiring 44 to the wiring 41 and not to flow in a direction opposite to that direction. The wiring 42 is connected to the wiring 43 via a rectifier D2. The rectifier D2 causes current to flow in a direction from the wiring 43 to the wiring 42 and not to flow in a direction opposite to that direction. Each of the rectifier D1 and the rectifier D2 is, for example, an electrical element, such as a diode, having a rectification function, but may be a rectifying device.

The detector 60 functions as a first detector that detects the rotation angle of the rotor 10. The detector 60 in the first embodiment detects the rotation angle of the rotor 10 on a predetermined cycle and outputs signals that indicate the rotation angle. The specific example of the detector 60 is not limited to one configured to directly detect the rotation angle of the rotor 10. For example, when the rotation driver M includes a function to detect the rotation angle of the shaft S1, the control circuit 70 may be configured to be capable of acquiring the rotation angle of the rotor 10 in accordance with the rotation angle of the shaft S1 that is output from the rotation driver M. Obviously, a rotation angle detector, such as an encoder, provided independently of the rotation driver M may be provided to the rotor 10 or the shaft S1.

The control circuit 70 controls the operation of the switching circuit 50 in accordance with the rotation angle of the rotor 10. The control circuit 70 includes a first controller 71 and a second controller 72. The first controller 71 controls the operation of the second switch 52 and the third switch 53 in accordance with the rotation angle of the rotor 10. The second controller 72 detects the rotation speed of the rotor 10 based on changes in rotation angle of the rotor 10 that are determined based on signals output from the detector 60 on a predetermined cycle. That is, the detector 60 and the second controller 72 in the first embodiment operate in cooperation to function as a second detector. Furthermore, the second controller 72 controls the operation of the first switch 51 so as to disconnect the pair of coils 30, 30 from the charger-discharger 40 when the rotation speed of the rotor 10 is outside a predetermined rotation speed range. This function of the second controller 72 is described later. The control circuit 70 is, for example, an integrated circuit but is not limited thereto. The control circuit 70 may be any circuit or assembly of circuits that includes the functions of the first controller 71 and the second controller 72 and may be composed of a plurality of circuits.

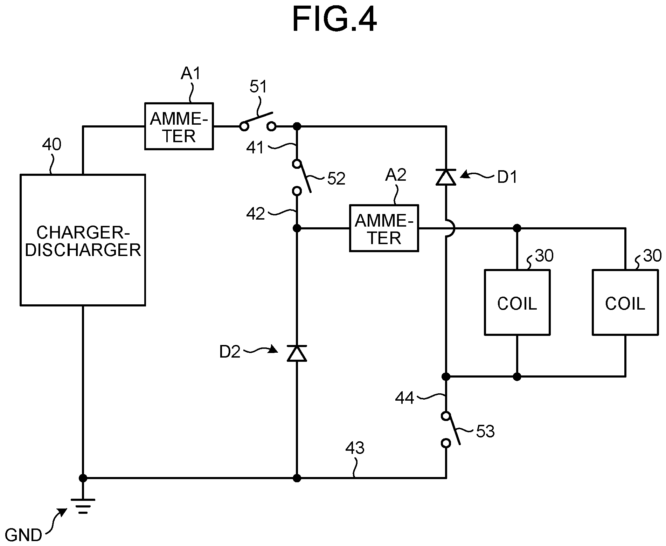

FIG. 4 illustrates an example of a schematic configuration of a circuit including the coils 30, the charger-discharger 40, and the switching circuit 50. The rotor 10, the detector 60, and the control circuit 70, which are illustrated in FIG. 3, are omitted in the schematic configuration of the circuit illustrated in drawings such as FIG. 4. An ammeter A1 is provided between the charger-discharger 40 and the first switch 51 in the schematic configuration of the circuit illustrated in drawings such as FIG. 4. Furthermore, an ammeter A2 is provided between the wiring 42 and the coils 30 in the schematic configuration of the circuit illustrated in drawings such as FIG. 4. The ammeter A1 and the ammeter A2 can be omitted.

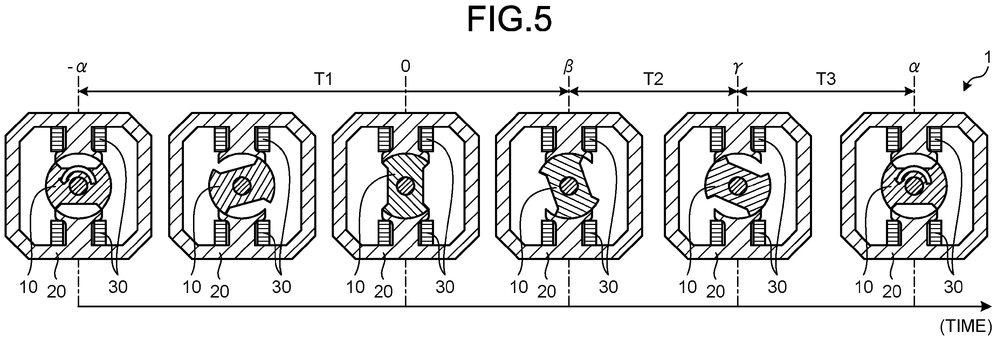

FIG. 5 illustrates an example of the relations of the rotation angle of the rotor 10 with a first period T1, a transition period T2, and a second period T3. Sectional views of the vibration control device 1 illustrated in FIG. 5 are sectional views taken along the A-A line of FIG. 1 as in FIG. 2. Description given with reference to FIG. 5 assumes that the rotation angle of the rotor 10 illustrated in FIG. 2 is 0 degrees (θ [deg]). The pole parts 11 approach closest to the coils 30 when the rotation angle of the rotor 10 is 0 degrees. It is also assumed that the rotor 10 rotates counterclockwise in FIG. 5, which illustrates the sectional views taken along the A-A line of FIG. 1.

The first period T1 is a period in which the rotation angle of the rotor 10 ranges from -α degrees to β degrees. The transition period T2 is a period in which the rotation angle of the rotor 10 ranges from β degrees to γ degrees. The second period T3 is a period in which the rotation angle of the rotor 10 ranges from γ degrees to α degrees. Here, α > γ > β > 0. More specifically, for example, when the rotation angle of the rotor 10 is D, the rotation angle of the rotor 10 in the first period T1 is such that -α ≥ D > β, the rotation angle of the rotor 10 in the transition period T2 is such that β ≥ D > γ, and the rotation angle of the rotor 10 in the second period T3 is such that γ ≥ D > α. The position of any of the equality signs used along with inequality signs can be changed as appropriate unless the change results in contradiction.

In the example illustrated in FIG. 5, α = 90. Accordingly, the first period T1 illustrated in FIG. 5 is a period in which the rotation angle of the rotor 10 ranges from -90 degrees to β degrees over 0 degrees. The transition period T2 illustrated in FIG. 5 is a period in which the rotation angle of the rotor 10 ranges from β degrees to γ degrees. Here, β and γ are less than 90 degrees, and β < γ. The second period T3 illustrated in FIG. 5 is a period in which the rotation angle of the rotor 10 ranges from γ degrees to 90 degrees.

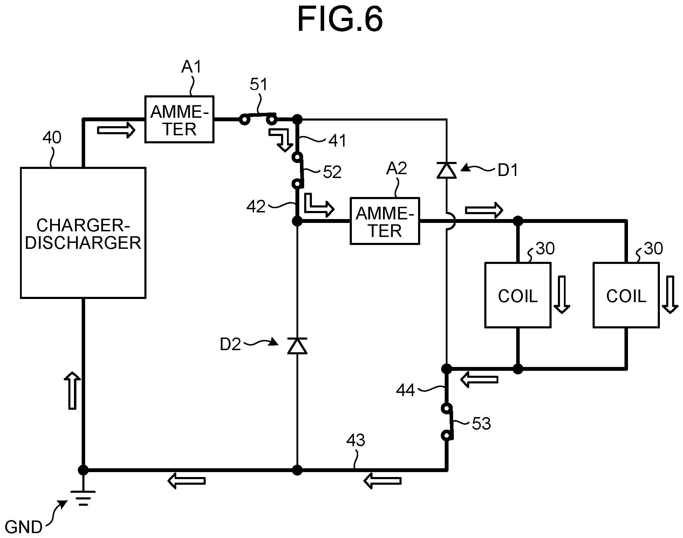

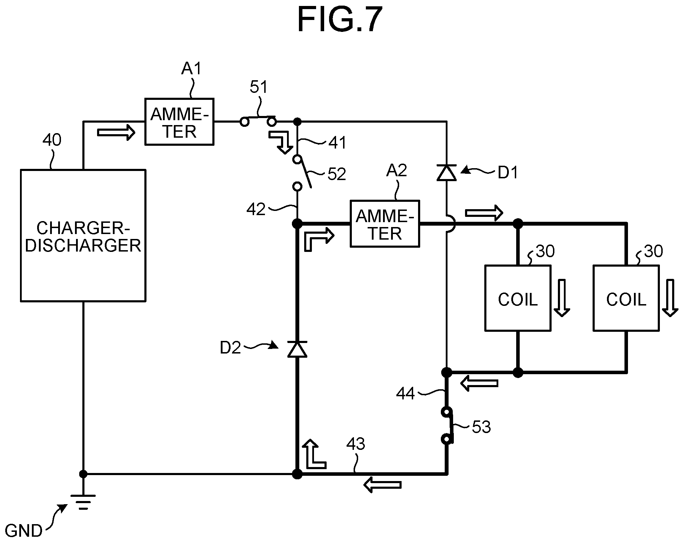

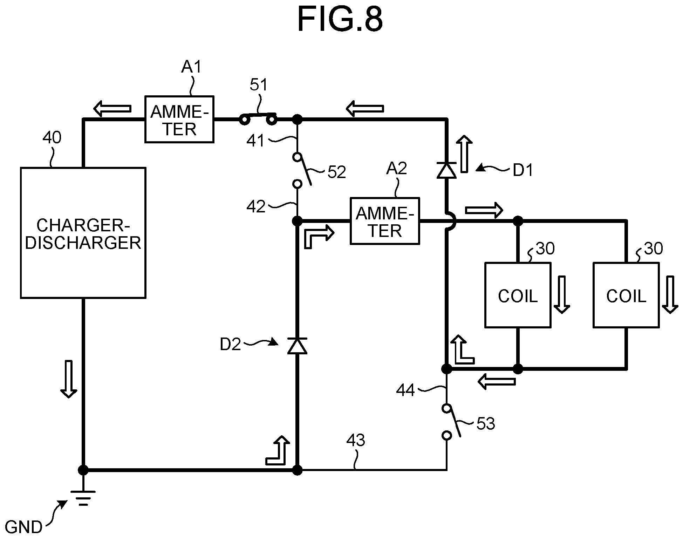

FIG. 6 illustrates the state of the circuit including the coils 30, the charger-discharger 40, and the switching circuit 50 during the first period T1. FIG. 7 illustrates the state of the circuit including the coils 30, the charger-discharger 40, and the switching circuit 50 during the transition period T2. FIG. 8 illustrates the state of the circuit including the coils 30, the charger-discharger 40, and the switching circuit 50 during the second period T3. FIG. 9 is a schematic graph illustrating the relations of current measured by an ammeter A1 and current measured by the ammeter A2 with each of the first period T1, the transition period T2, and the second period T3. FIG. 10 illustrates the relations between the torque W1 on the rotation driver M, torque W2 on the vibration control device 1, and combined torque W3 obtained by combining the torque W1 and the torque W2.

Description given with reference to FIG. 6 and FIG. 10 assumes that the first switch 51 is on. That is, the pair of coils 30, 30 is connected to the charger-discharger 40. L1 in FIG. 9 denotes current measured by the ammeter A1. L2 in FIG. 9 denotes current measured by the ammeter A2.

As indicated by the torque W1 in FIG. 10, the invention assumes that torque ripple due to torque fluctuation on the rotation driver M occurs on a 180-degree cycle. The first period T1 includes a period in which torque on the rotation driver M becomes the smallest in the fluctuation of the torque. The second period T3 includes a period in which torque on the rotation driver M becomes the largest in the fluctuation of the torque. The transition period T2 is a period interposed between the first period T1 and the second period T3. FIG. 10 illustrates the lowest torque P1 and the highest torque P2 that the torque W1 takes. The vibration control device 1 in the first embodiment is provided on the assumption that torque ripple indicated by the torque W1 in FIG. 10 occurs on the rotation driver M.

When the rotation angle of the rotor 10, which is detected by the detector 60, corresponds to a rotation angle of the first period T1, the first controller 71 turns on both the second switch 52 and the third switch 53 as illustrated in FIG. 6. Consequently, power is supplied from the charger-discharger 40 to the coils 30, whereby the coils 30 are excited. Thus, in the first period T1, current flowing from the charger-discharger 40 toward the pair of coils 30, 30 is measured by the ammeter A1 and the ammeter A2 as illustrated in FIG. 9. Therefore, during a period with the rotation angle between -α degrees and β degrees illustrated in FIG. 5, magnetic force acts in such a manner that the pair of pole parts 11, 11 is attracted toward the pair of coils 30, 30.

In the first embodiment, while the rotation angle of the rotor 10 changes from -α degrees (-90 degrees) toward 0 degrees, the magnetic force of the pair of coils 30, 30 in the first period T1 attracts the pole parts 11 toward the coil 30, thus generating positive torque on the rotor 10 to cause the rotation angle of the rotor 10 to become closer to 0 degrees, as indicated by the torque W2 in FIG. 10. When the rotation angle of the rotor 10 reaches 0 degrees, the torque becomes 0. Furthermore, when the rotation angle of the rotor 10 exceeds 0 degrees, the magnetic force attracts the pole parts 11 toward the coils 30, thus generating negative torque on the rotor 10 to return the rotation angle of the rotor 10 to 0 degrees.

When the rotation angle of the rotor 10, which is detected by the detector 60, corresponds to a rotation angle of the transition period T2, the first controller 71 turns off the second switch 52 and turns on the third switch 53 as illustrated in FIG. 7. This forms a closed circuit that includes the pair of coils 30, 30, the wiring 43, the wiring 44, the third switch 53, and the rectifier D2, and current circulates within the closed circuit. The current L1 is not generated between the coils 30 and the charger-discharger 40 because a route in the closed circuit through which current circulates does not include the charger-discharger 40, the first switch 51, the second switch 52, and the ammeter A1. Thus, in the transition period T2, the ammeter A1 does not measure current, as illustrated in FIG. 9. In addition, the current L2 measured by the ammeter A2 is larger than in the first period T1. In the transition period T2, the current L2 flowing within the closed circuit slightly increases because of electromagnetic induction generated by the coils 30 that keeps on being excited by current that circulates within the closed circuit, and by changes in rotation angle of the rotor 10. Therefore, in a period during which the rotation angle is between β degrees and γ degrees, which is illustrated in FIG. 5, magnetic force that acts in such a manner as to attract the pair of pole parts 11, 11 toward the pair of coils 30, 30, is slightly larger than in a period during which the rotation angle is between -α degrees and β degrees. In the transition period T2, an increase in current and a consequent rise in voltage are significantly smaller than when the rotor 10 is formed of a ferromagnetic body.

In the first embodiment, while the rotation angle of the rotor 10 changes from β degrees toward γ degrees, the magnetic force of the pair of coils 30, 30 in the transition period T2 attracts the pole parts 11 toward the coils 30, thus generating negative torque on the rotor 10 to return the rotation angle of the rotor 10 to 0 degrees (see FIG. 10).

When the rotation angle of the rotor 10, which is detected by the detector 60, corresponds to a rotation angle of the second period T3, the first controller 71 turns off both the second switch 52 and the third switch 53 as illustrated in FIG. 8. Consequently, a circuit is formed that has the rectifier D1 interposed between the pair of coils 30, 30 and the positive electrode of the charger-discharger 40 and that has the rectifier D2 interposed between the pair of coils 30, 30 and the negative electrode of the charger-discharger 40. The rectifier D1 causes rectification by which current flows from the negative electrode of the charger-discharger 40 to the coils 30. The rectifier D2 causes rectification by which current flows from the pair of coils 30, 30 to the charger-discharger 40. Therefore, current that has been circulating in the transition period T2 flows into the charger-discharger 40. That is, in the second period T3, current from the pair of coils 30, 30 becomes regenerative current and operates to charge the charger-discharger 40. Thus, in the transition period T2, as illustrated in FIG. 9, current flowing from the pair of coils 30, 30 to the charger-discharger 40 is measured by the ammeter A1 and the ammeter A2. The regenerative current gradually decreases. In a part between the charger-discharger 40 and the first switch 51, where the ammeter A1 is provided, current measured in the first period T1 and current measured in the second period T3 flow in opposite directions. Therefore, in FIG. 9, the positive side represents rightward flow while the negative side represents leftward flow.

In the first embodiment, while the rotation angle of the rotor 10 changes toward α degrees (90 degrees), the magnetic force of the pair of coils 30, 30 in the second period T3 attracts the pole parts 11 toward the coils 30, thus generating negative torque on the rotor 10 to return the rotation angle of the rotor 10 toward 0 degrees, as indicated in FIG. 10. This negative torque decreases after the force that attracts the pole parts 11 toward the coils 30 hits a peak.

As described with reference to FIG. 6 to FIG. 10, in the first embodiment, positive torque acts on the rotor 10 while the rotation angle of the rotor 10 changes from the -90 degrees to 0 degrees. Thus, the positive torque acting on the rotor 10 is combined with torque including the lowest torque P1 and acting on the rotation driver M. This causes the combined torque W3 acting on the shaft S1 in the first period T1 to be higher than the torque W1 acting in the first period T1. Additionally, negative torque acts on the rotor 10 while the rotation angle of the rotor 10 changes from 0 degrees to 90 degrees. Thus, the negative torque acting on the rotor 10 is combined with torque including the highest torque P2 and acting on the rotation driver M. This causes the combined torque W3 acting on the shaft S1 in the second period T3 to be lower than the torque W1 acting in the second period T3. Consequently, as indicated by the combined torque W3 in FIG. 10, torque fluctuates in a smaller range than the torque W1.

The first period T1, the transition period T2, and the second period T3 described with reference to FIG. 6 to FIG. 10 are cyclically repeated. In the first embodiment, the sequence of the first period T1, the transition period T2, and the second period T3 is repeated on a cycle of a half (180 degrees) of a rotation angle change (360 degrees) that corresponds to one rotation of the rotor 10. That is, in the first embodiment, a range from -90 degrees through 0 degrees to 90 degrees is set to one cycle, and a range from 90 degrees through 180 degrees to 270 degrees is also set to one cycle. The sequence of the first period T1 the transition period T2, and the second period T3 is repeated for two cycles each time the rotor 10 rotates once. In one cycle having the range from 90 degrees to 270 degrees, "180 degrees" corresponds to "0 degrees" in one cycle having the range from 90 degrees through 0 degrees to 90 degrees.

When n denotes the number of pole parts 11, one cycle of torque ripple generated by the vibration control device 1 corresponds to a range of 360/n degrees. Therefore, in the first embodiment, one cycle of torque ripple of the torque W2 generated by the vibration control device 1 corresponds to 180 degrees because n = 2, as illustrated in FIG. 10. Thus, the vibration control device 1 can be provided that generates the torque W2 that reduces the range of torque fluctuation due to the rotation driver M that generates the torque W1, which is second order fluctuation torque, as illustrated in FIG. 10. In other words, the vibration control device 1 in which the number of pole parts 11 is n has a configuration corresponding to the rotation driver M that generates torque ripple of n-th order fluctuation.

In accordance with the specific mode of the vibration control device 1, particularly with torque that is generated by the rotor 10, the pole parts 11, and the coils 30, the specific values of β and γ are set so that: the gradual torque increase included in the torque W1 and the gradual torque decrease included in the torque W2 can correspond to each other in the transition period T2; and the value of the regenerative current can be zero or a value that is as close to zero as possible in a period during which the rotation angle of the rotor 10 changes from γ to α.

The torque W2 to be caused by the vibration control device 1, which is described above with reference to FIG. 6 to FIG. 10, is controlled so as to be generated when the rotation speed is within the predetermined rotation speed range. The rotation speed range is a range of the rotation speed of the shaft S1 such that the range of torque fluctuation due to the combined torque W3 is smaller than the range of torque fluctuation due to the torque W1. The rotation speed range corresponds to the specific mode of the vibration control device 1, particularly to torque that is generated by the rotor 10, the pole parts 11, and the coils 30 in accordance with the rotation speed of the shaft S1. In other words, a range of the rotation speed of the shaft S1 at which the range of torque fluctuation due to the combined torque W3 is smaller than the range of torque fluctuation due to the torque W1, is the effective rotation speed range of the vibration control device 1. Information that indicates the effective rotation speed range has been stored in the control circuit 70 (see FIG. 3) in a state that allows the second controller 72 to acquire the information. The second controller 72 determines whether the rotation speed of the rotor 10 that is obtained based on a signal received from the detector 60 is included in the effective rotation speed range indicated by the information.

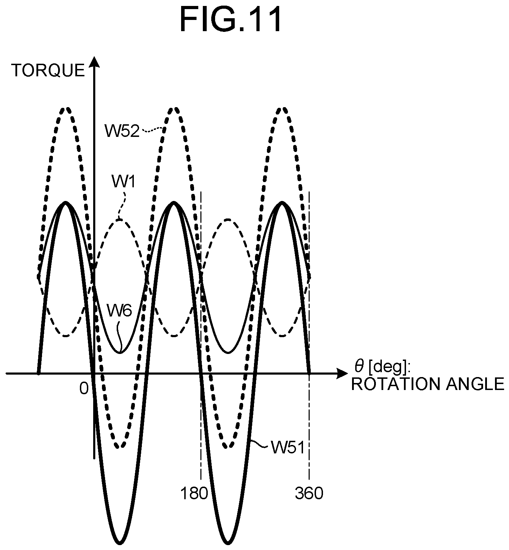

FIG. 11 illustrates an example in which the first switch 51 is turned on at a rotation speed at which the range of torque fluctuation due to combined torque W6 is larger than that of torque W1. Torque generated by the rotor 10, the pole parts 11, and the coils 30 increases or decreases in accordance with the rotation speed. Thus, as indicated by torque W51 in FIG. 11, when the range of torque fluctuation generated by the rotor 10, the pole parts 11, and the coils 30 exceeds twice the range of torque fluctuation due to the torque W1, the range of torque fluctuation due to the combined torque W6 obtained by combining the torque W1 and the torque W51 is larger than the range of torque fluctuation due to the torque W1. When the rotor 10 is in such a rotation speed range, and operation such as excitation of the coils 30 described with reference to FIG. 6 to FIG. 10 becomes effective, the fluctuation range of the torque acting on the shaft S1 is increased by the vibration control device 1. In FIG. 11, torque W52 is hypothetical torque obtained by shifting the torque W51 in such a manner that the origin of the torque W51 matches the same position as that of the torque W1.

For the above reason, in the first embodiment, when the rotation speed of the rotor 10 is outside the predetermined rotation speed range, the second controller 72 turns off the first switch 51. When the first switch 51 is turned off, the pair of coils 30, 30 and the charger-discharger 40 becomes disconnected from each other. Consequently, no current is generated between the pair of coils 30, 30 and the charger-discharger 40. That is, it is possible to hamper the occurrence of a state in which the fluctuation range of torque that acts on the shaft S1 due to torque generated by the rotor 10, the pole parts 11, and the coils 30 is increased by the vibration control device 1.

When the rotation speed of the rotor 10 is in the predetermined rotation speed range, the second controller 72 turns on the first switch 51 instead. Consequently, as described with reference to FIG. 6 to FIG. 10, it is possible, by generating the torque W2, to generate the combined torque W3 having a torque fluctuation range smaller than that of the torque W1.

As described above, according to the first embodiment, the control circuit 70 causes the switching circuit 50 to operate so that: power is supplied to the pair of coils 30, 30 from the charger-discharger 40 in the first period T1; power generated by the pair of coils 30, 30 is supplied to the charger-discharger 40 in the second period T3; and a closed circuit that includes the pair of coils 30, 30 but does not include the charger-discharger 40 is formed in the transition period T2. Consequently, the torque W2 can be generated that operates to reduce torque fluctuation due to the torque W1. Therefore, torque acting on the shaft S1 can be caused to turn into the combined torque W3 having a torque fluctuation range smaller than that of the torque W1. Torque ripple of the torque W1 due to the rotation driver M can be thus reduced. Furthermore, the rotor 10 is formed of a soft magnetic body. Thus, the vibration control device 1 can be hampered from operating like a power generator when the rotor 10 simply rotates. Therefore, the level of durability against high voltage required of a circuit including the coils 30 can be lowered, whereby the vibration control device 1 can have a simpler configuration.

Furthermore, the switching circuit 50 includes the first switch 51 configured to between connecting and disconnecting the pair of coils 30, 30 and the charger-discharger 40. The control circuit 70 disconnects the pair of coils 30, 30 and the charger-discharger 40 from each other when the rotor 10 is out of the effective rotation speed range. Consequently, the torque W2 can be more reliably generated that operates to reduce the torque fluctuation range of the torque W1.

Particularly in the case where the rotation driver M is an engine mounted on an automobile, vibration due to torque ripple would tend to be larger when the rotation speed of the output shaft is in a range of low rotation speed. When the vibration control device 1 that is adapted for such a range of low rotation speed is attached to the engine, vibration can be substantially reduced.

With reference to FIG. 10, an example is described in which the torque W1 has a well-shaped waveform as in the case with a sinusoidal wave. However, the relation between torque fluctuation due to the rotation driver M and the rotation angle and the relation between torque fluctuation due to the vibration control device 1 corresponding to the torque fluctuation due to the rotation driver M and the rotation angle, are not limited to those in the example. Even when the torque fluctuation due to the rotation driver M has a waveform different from a sinusoidal wave, the same advantages can be provided by: exciting the coils 30 at a time when torque due to the rotation driver M becomes smaller than the average of the torque of the rotation driver M; and supplying regenerative power from the coils 30 to the charger-discharger 40 at a time when torque due to the rotation driver M becomes larger than the average of the torque of the rotation driver M.

### (Modification)

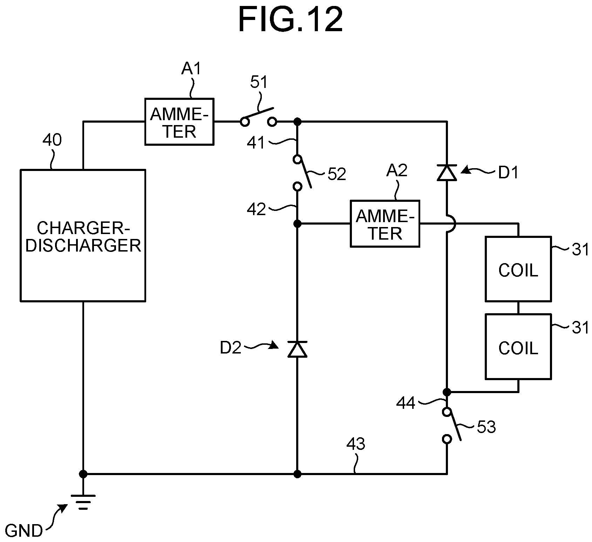

FIG. 12 illustrates an example of a schematic configuration of a circuit including coils 31, the charger-discharger 40, and the switching circuit 50 in a modification. In the first embodiment, the pair of coils 30, 30 is connected to the charger-discharger 40 in parallel when connected to the charger-discharger 40, but the connection example is not limited thereto. As illustrated in FIG. 12, a pair of coils 31, 31 may be connected to the charger-discharger 40 in series when connected to the charger-discharger 40. The pair of coils 31, 31 illustrated in FIG. 12 has the same configurations as the pair of coils 30, 30 except for being connected to the charger-discharger 40 in series.

According to the modification, it is easier to increase the inductance of the pair of coils 31, 31 than in first embodiment.

### (Second Embodiment)

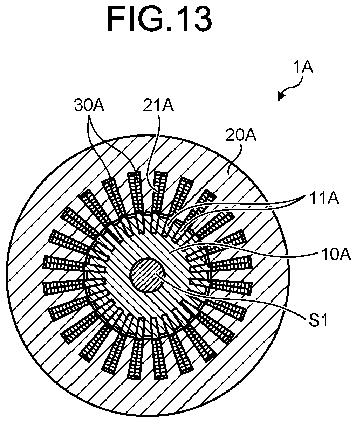

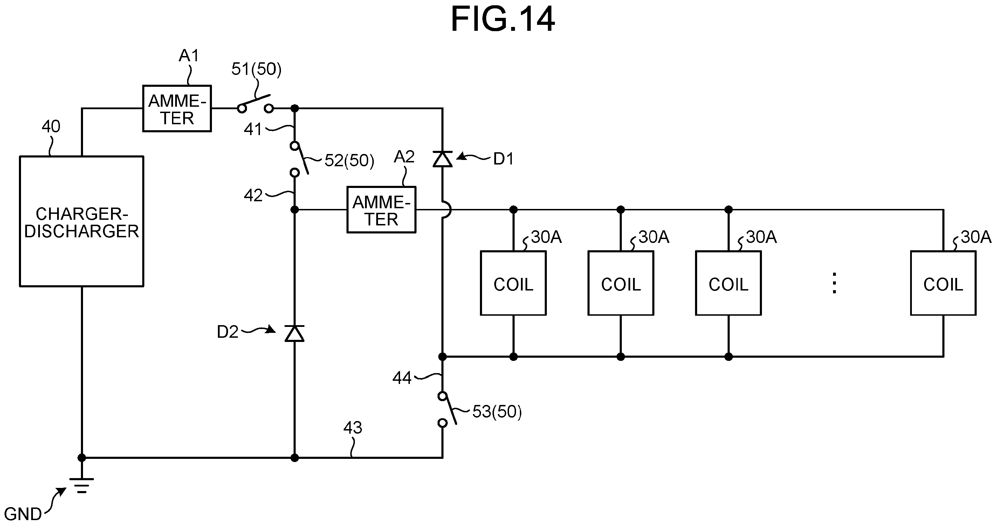

FIG. 13 is a sectional view illustrating the main configuration of a vibration control device 1A in a second embodiment. FIG. 14 is a diagram illustrating an example of a schematic configuration of a circuit including coils 30A, the charger-discharger 40, and the switching circuit 50 in the second embodiment.

A rotor 10A included in the vibration control device 1A in the second embodiment includes a plurality of pairs of pole parts 11A, and the pole parts 11A in each pair are provided with the shaft S1 therebetween in such a manner that the pole parts 11A protrude in radially opposite directions. FIG. 13 exemplifies a configuration in which the rotor 10A includes 12 pairs of pole parts 11A, or 24 pole parts 11A in total. Thus, torque ripple is generated by the vibration control device 1A on a cycle of 15 degrees. Therefore, the vibration control device 1A can be used as a configuration adapted for the rotation driver M that generates torque ripple of 24th order fluctuation.

The number of pole parts 11A is equal to or greater than the number of coils 30A. In the configuration illustrated in FIG. 13, the number of pole parts 11A is equal to the number of coils 30A. That is, 12 pairs of coils 30A, or 24 coils 30A in total, are provided with the shaft S1 therebetween. A stator 20A is provided in a form suitable for supporting the coils 30A. The number of core parts 21A corresponds to the number of coils 30A.

The coils 30A share the switching circuit 50 with one another. Specifically, as exemplified in FIG. 14, all of the coils 30A are connected in parallel and share with one another the first switch 51, the second switch 52, the third switch 53, the rectifier D1, the rectifier D2, which are provided in a route through which the coils 30A are electrically connected to the charger-discharger 40. In other words, the configuration illustrated in FIG. 14 is the same as the configuration illustrated in FIG. 4 except for having a larger number of coils 30A in place of the two coils 30 in the configuration illustrated in FIG. 4.

All of the coils 30A are connected to the charger-discharger 40 in parallel in FIG. 14. However, this is not a limiting example. For example, as in the configuration illustrated in FIG. 12, all of the coils 30A may be connected to charger-discharger 40 in series. Another configuration may be employed in which, while connection between the paired coils 30A is either one of the parallel connection and the serial connection, connection between the pairs of coils 30A, 30A is the other of the parallel connection and the serial connection. That is, the serial connection and the parallel connection may be employed concurrently.

In the second embodiment, the cycle in which connection between the coils 30A and the charger-discharger 40 is switched corresponds to the number of pole parts 11A. That is, for example, α = 7.5 in the second embodiment.

The rotor 10A, the pole parts 11A, the stator 20A, the core parts 21A, and the coil 30A in the second embodiment each have the same configuration as the corresponding one of the rotor 10, the pole parts 11, the stator 20, the core parts 21, and the coils 30 in the first embodiment unless otherwise described with reference to FIG. 13 and FIG. 14. The vibration control device 1A has the same configuration as the vibration control device 1 unless otherwise described above.

According to the second embodiment, the number of pole parts 11A is set to a number corresponding to the fluctuation cycle of torque due to the rotation driver M, whereby the fluctuation of torque due to the vibration control device 1A can be generated on a cycle corresponding to the fluctuation cycle of the torque due to the rotation driver M.

In addition, switching control of the plurality of pairs of coils 30A can be synchronized. Thus, the configuration illustrated in FIG. 14 can eliminate the possibility of malfunctions that would occur when the plurality of pairs of the coils 30A operate asynchronously. Therefore, malfunctions of the vibration control device 1A can be reduced.

### (Third Embodiment)

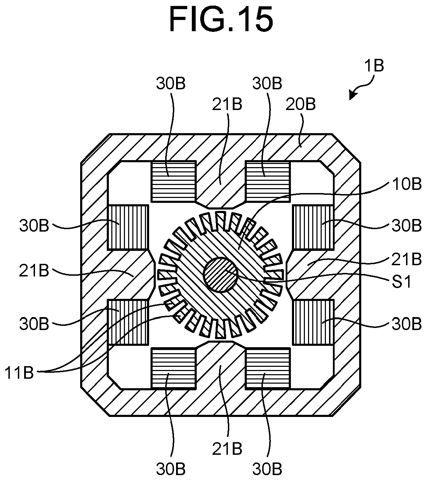

FIG. 15 is a sectional view illustrating the main configuration of a vibration control device 1B in a third embodiment. The number of the pairs of pole parts 11B included in the vibration control device 1B in the third embodiment is larger than the number of the pairs of coils 30B. In the configuration illustrated in FIG. 15, two pairs of coils 30B, or four coils 30B in total, are provided with the shaft S1 therebetween. A stator 20B is provided in a form suitable for supporting the coils 30B. The number of core parts 21B corresponds to the number of coils 30B.

In the third embodiment, the cycle in which connection between the coils 30B and the charger-discharger 40 is switched corresponds to the number of pole parts 11B. That is, in the third embodiment, for example, α = 7.5 as in the second embodiment.

The rotor 10B, the pole parts 11B, the stator 20B, the core parts 21B, and the coil 30B in the third embodiment each have the same configuration as the corresponding one of the rotor 10A, the pole parts 11A, the stator 20A, the core parts 21A, and the coils 30A in the second embodiment unless otherwise described with reference to FIG. 15. The vibration control device 1B has the same configuration as the vibration control device 1 unless otherwise described above.

According to the third embodiment, the same advantages as according to the second embodiment can be provided with a smaller number of coils 30B.

### Reference Signs List

1, 1A, 1B VIBRATION CONTROL DEVICE
10, 10A, 10B ROTOR
11, 11A, 11B POLE PART
20, 20A, 20B STATOR
21, 21A, 21B CORE PART
30, 31, 30A, 30B COIL
40 CHARGER-DISCHARGER
50 SWITCHING CIRCUIT
51 FIRST SWITCH
52 SECOND SWITCH
53 THIRD SWITCH
60 DETECTOR
70 CONTROL CIRCUIT
71 FIRST CONTROLLER
72 SECOND COTROLLER
D1, D2 RECTIFIER
S1 SHAFT
M ROTATION DRIVER

## Claims

1. A vibration control device comprising:
a rotor (10) and fixed to an output shaft of a rotation driver or to a shaft that rotates in conjunction with the output shaft, the rotor (10) being configured to rotate in response to rotation of the output shaft;
a stator (20) provided in a radial circumference of a rotation axis of the rotor (10);
coils (30) fixed to the stator (20) and provided in a pair with the rotation axis therebetween;
a charger-discharger (40) provided in such a manner as to be connectable to the coils (30);
a switching circuit (50) provided capable of switching between connecting and disconnecting the coils (30) and the charger-discharger (40);
a first detector (60) configured to detect a rotation angle of the rotor (10); and
a control circuit (70) configured to control operation of the switching circuit (50) in accordance with the rotation angle of the rotor (10),
**characterised in that**
the rotor (10) is formed of a soft magnetic body, and
the control circuit (70) causes the switching circuit (50) to operate in such a manner that
power is supplied from the charger-discharger (40) to the coils (30) when the rotation angle of the rotor (10) corresponds to a first period (T1) of a predetermined cycle, the first period (T1) including a period in which torque generated on the rotation driver becomes the smallest in fluctuation of the torque in the predetermined cycle,
power generated by the coils (30) is supplied to the charger-discharger (40) when the rotation angle of the rotor (10) corresponds to a second period (T3) of the predetermined cycle, the second period (T3) including a period in which the torque becomes the largest in the predetermined cycle, and that
a closed circuit including the coils (30) and without including the charger-discharger (40) is formed such that no current is generated between the charger-discharger (40) and the coils (30), when the rotation angle of the rotor (10) corresponds to a transition period (T2) after the first period (T1) before the second period (T3), wherein the sequence of the first period (T1), the transition period (T2) and the second period (T3) is repeated in accordance with the rotation of the rotor (10).

2. The vibration control device according to claim 1, further comprising
a second detector (60) configured to detect a rotation speed of the rotor (10), wherein
the switching circuit (50) includes a switch configured to switch between connecting and disconnecting the coils (30) and the charger-discharger (40), and
the control circuit (70) disconnects the coils (30) from the charger-discharger (40) when the rotation speed is out of a predetermined rotation speed range.

3. The vibration control device according to claim 1 or 2, wherein
a plurality of pairs of the coils (30) are provided,
the rotor (10) includes a plurality of pairs of pole parts (11), the pole parts (11) in each pair being provided with the rotation axis therebetween in such a manner that the paired pole parts (11) protrude in radially opposite directions, and
the pole parts (11) are not less in number of pairs than the coils (30).

4. The vibration control device according to claim 3, wherein a plurality of pairs of the coils (30) share the switching circuit (50) with one another.

5. The vibration control device according to any one of claims 1 to 4, wherein the coils (30) provided in a pair are provided in such a manner as to be connectable to the charger-discharger (40) in parallel.

6. The vibration control device according to any one of claims 1 to 4, wherein the coils (30) provided in a pair are provided in such a manner as to be connectable to the charger-discharger (40) in series.

## Patentansprüche

1. Vibrationssteuereinrichtung, die aufweist:
einen Rotor (10), und fixiert an einer Ausgangswelle von einem Rotationsantrieb oder an eine Welle, die in Verbindung mit der Ausgangswelle rotiert, ist der Rotor (10) konfiguriert, um in Reaktion auf eine Rotation von der Ausgangswelle zu rotieren;
einen Stator (20), der in einem radialen Umfang von einer Rotationsachse von dem Rotor (10) zur Verfügung gestellt worden ist;
Spulen (30), die an dem Stator (20) festgelegt sind und in einem Paar mit der Rotationsachse dazwischen zur Verfügung gestellt sind;
einer Lade-Entladeeinrichtung (40), die in einer solchen Weise zur Verfügung gestellt worden ist, um an die Spulen (30) anschließbar zu sein;
eine schaltende Schaltung (50), die dazu in der Lage vorgesehen ist, um zwischen dem Anschließen und dem Trennen der Spulen (30) und der Lade-Entladeeinrichtung (40) zu schalten;
einen ersten Detektor (60), der konfiguriert ist, um einen Rotationswinkel von dem Rotor (10) zu detektieren; und
eine Steuerschaltung (70), die konfiguriert ist, um den Betrieb der schaltenden Schaltung (50) gemäß dem Rotationswinkel von dem Rotors (10) zu steuern,
**dadurch gekennzeichnet, dass**
der Rotor (10) aus einem weichmagnetischen Körper gebildet ist, und
die Steuerschaltung (70) veranlasst die schaltende Schaltung (50) dazu, in einer solchen Weise zu arbeiten, dass Leistung von der Lade-Entladeeinrichtung (40) zu den Spulen (30) zugeführt wird, wenn der Rotationwinkel von dem Rotor (10) zu einer ersten Periode (T1) von einem vorbestimmten Zyklus korrespondiert, wobei die erste Periode (T1) eine Periode enthält, in welcher ein Drehmoment, das auf dem Rotationsantrieb erzeugt wird, der geringste bezüglich einer Fluktuation von dem Drehmoment in dem vorbestimmten Zyklus wird,
Leistung, die durch die Spulen (30) erzeugt wird, wird der Lade-Entladeeinrichtung (40) zugeführt, wenn der Rotationswinkel von dem Rotor (10) zu einer zweiten Periode (T3) von dem vorbestimmten Zyklus entspricht, wobei die zweite Periode (T3) eine Periode enthält, in welcher das Drehmoment das größte in dem vorbestimmten Zyklus wird, und indem
eine geschlossene Schaltung, die die Spulen (30) enthält, und ohne die Lade-Entladeeinrichtung (40) zu enthalten, die derart ausgebildet ist, dass kein Strom zwischen der Lade-Entladeeinrichtung (40) und den Spulen (30) erzeugt wird, wenn der Rotationswinkel von dem Rotor (10) zu einer Übergangsperiode (T2) nach der ersten Periode (T1) vor der zweiten Periode (T3) entspricht, wobei die Abfolge von der ersten Periode (T1), der Übergangsperiode (T2) und der zweiten Periode (T3) gemäß der Rotation von dem Rotor (10) wiederholt wird.

2. Vibrationssteuereinrichtung gemäß Anspruch 1, die ferner aufweist:
einen zweiten Detektor (60), der konfiguriert ist, um eine Rotationsgeschwindigkeit von dem Rotor (10) zu detektieren, wobei
die schaltende Schaltung (50) einen Schalter enthält, der konfiguriert ist, um zwischen dem Verbinden und dem Trennen der Spulen (30) und der Lade-Entladeeinrichtung (40) zu schalten, und
die Steuerschaltung (70) trennt die Spulen (30) von der Lade-Entladeeinrichtung (40), wenn die Rotationsgeschwindigkeit außerhalb eines vorbestimmten Rotationsgeschwindigkeitsbereiches ist.

3. Vibrationssteuereinrichtung gemäß Anspruch 1 oder 2, wobei
mehrere von Paaren von Spulen (30) zur Verfügung gestellt sind,
der Rotor (10) mehrere Paare von Polabschnitten (11) enthält, wobei die Polabschnitte (11) in jedem Paar mit der Rotationsachse dazwischen in einer solchen Weise zur Verfügung gestellt sind, dass die gepaarten Polabschnitte (11) in radial gegenüberliegenden Richtungen vorstehen bzw. erstreckt sind, und
die Polabschnitte (11) sind in der Anzahl von Paaren nicht geringer als die Spulen (30).

4. Vibrationssteuereinrichtung gemäß Anspruch 3, wobei mehrere der Paare der Spulen (30) die schaltende Schaltung (50) untereinander teilen.

5. Vibrationssteuereinrichtung gemäß irgendeinem der Ansprüche 1 bis 4, wobei die Spulen (30), die in einem Paar zur Verfügung gestellt sind, in einer solchen Weise vorgesehen sind, um an die Lade-Entladeeinrichtung (40) parallel anschließbar zu sein.

6. Vibrationssteuereinrichtung gemäß irgendeinem der Ansprüche 1 bis 4, wobei die Spulen (30), die in einem Paar zur Verfügung gestellt sind, in einer solchen Weise vorgesehen sind, um in Reihe an die Lade-Entladeeinrichtung (40) anschließbar zu sein.

## Revendications

1. Dispositif de contrôle des vibrations comprenant :
un rotor (10) et fixé à un arbre de sortie d'un entraîneur de rotation ou à un arbre qui tourne conjointement avec l'arbre de sortie, le rotor (10) étant configuré pour tourner en réponse à la rotation de l'arbre de sortie;
un stator (20) disposé dans une circonférence radiale d'un axe de rotation du rotor (10);
des bobines (30) fixées au stator (20) et disposées par paire avec l'axe de rotation entre elles ;
un chargeur-déchargeur (40) prévu de manière à pouvoir être connecté aux bobines (30) ;
un circuit de commutation (50) capable de commuter entre la connexion et la déconnexion des bobines (30) et du chargeur-déchargeur (40) ;
un premier détecteur (60) configuré pour détecter un angle de rotation du rotor (10) ; et
un circuit de commande (70) configuré pour commander le fonctionnement du circuit de commutation (50) en fonction de l'angle de rotation du rotor (10),
**caractérisé en ce que**
le rotor (10) est formé d'un corps magnétique doux, et
le circuit de commande (70) amène le circuit de commutation (50) à fonctionner de telle manière que l'énergie soit fournie depuis le chargeur-déchargeur (40) vers les bobines (30) lorsque l'angle de rotation du rotor (10) correspond à une première période (T1) d'un cycle prédéterminé, la première période (T1) comprenant une période pendant laquelle le couple généré sur l'entraîneur de rotation devient le plus petit en fluctuation du couple dans le cycle prédéterminé,
la puissance générée par les bobines (30) est fournie au chargeur-déchargeur (40) lorsque l'angle de rotation du rotor (10) correspond à une deuxième période (T3) du cycle prédéterminé, la deuxième période (T3) comprenant une période dans lequel le couple devient le plus grand dans le cycle prédéterminé, et
qu'un circuit fermé incluant les bobines (30) et sans inclure le chargeur-déchargeur (40) est formé de telle sorte qu'aucun courant n'est généré entre le chargeur-déchargeur (40) et les bobines (30), lorsque l'angle de rotation du rotor (10) correspond à une période de transition (T2) après la première période (T1) avant la deuxième période (T3), dans lequel la séquence de la première période (T1), de la période de transition (T2) et de la deuxième période (T3) est répétée en fonction de la rotation du rotor (10).

2. Dispositif de contrôle des vibrations selon la revendication 1, comprenant en outre un deuxième détecteur (60) configuré pour détecter une vitesse de rotation du rotor (10), dans lequel
le circuit de commutation (50) comprend un commutateur configuré pour commuter entre la connexion et la déconnexion des bobines (30) et du chargeur-déchargeur (40), et
le circuit de commande (70) déconnecte les bobines (30) du chargeur-déchargeur (40) lorsque la vitesse de rotation est en dehors d'une plage de vitesses de rotation prédéterminée.

3. Dispositif de contrôle des vibrations selon la revendication 1 ou 2, dans lequel une pluralité de paires de bobines (30) sont prévues,
le rotor (10) comprend une pluralité de paires de parties polaires (11), les parties polaires (11) de chaque paire étant dotées d'un axe de rotation entre elles de telle manière que les parties polaires (11) appariées font saillie dans des directions radialement opposées, et
les parties polaires (11) ne comportent pas moins de paires que les bobines (30).

4. Dispositif de contrôle des vibrations selon la revendication 3, dans lequel une pluralité de paires de bobines (30) partagent le circuit de commutation (50) les unes avec les autres.

5. Dispositif de contrôle des vibrations selon l'une quelconque des revendications 1 à 4, dans lequel les bobines (30) prévues par paire sont prévues de manière à pouvoir être connectées au chargeur-déchargeur (40) en parallèle.

6. Dispositif de contrôle des vibrations selon l'une quelconque des revendications 1 à 4, dans lequel les bobines (30) prévues par paire sont prévues de manière à pouvoir être connectées au chargeur-déchargeur (40) en série.
